# EUROPÄISCHE PATENTSCHRIFT

(11) **EP 1 335 256 B1**
(45) Veröffentlichungstag und Bekanntmachung des Hinweises auf die Patenterteilung: **13.09.2006**
(21) Anmeldenummer: 03002268.5
(22) Anmeldetag: 01.02.2003
(51) Int. Cl.: G05B 19/042, B29C 45/76

(54) **Spritzgiessmaschine mit online bedienbarem Steuersystem**
Injection moulding machine with online operable regulation system
Machine de moulage par injection avec dispositif de contrôle utilisable online

(30) Priorität: 07.02.2002 DE 10205016
(43) Veröffentlichungstag der Anmeldung: 13.08.2003
(73) Patentinhaber: Krauss-Maffei Kunststofftechnik GmbH, 80997 München (DE)
(72) Erfinder: Züfle, Michael, 85259 Wiedenzhausen (DE)
(74) Vertreter: Zollner, Richard

(56) Entgegenhaltungen:
- EP-A- 0 917 034
- EP-A- 0 990 966
- EP-A- 1 085 389
- EP-A- 1 128 244
- WO-A-01/44883
- DE-A- 10 041 049
- US-A1- 2002 031 567
- PATENT ABSTRACTS OF JAPAN vol. 2000, no. 23, 10. Februar 2001 (2001-02-10) & JP 2001 162662 A (SUMITOMO HEAVY IND LTD), 19. Juni 2001 (2001-06-19)

## Beschreibung

Die Erfindung bezieht sich auf eine Spritzgießmaschine mit einem Steuersystem, insbesondere unter Einsatz eines Bussystems.

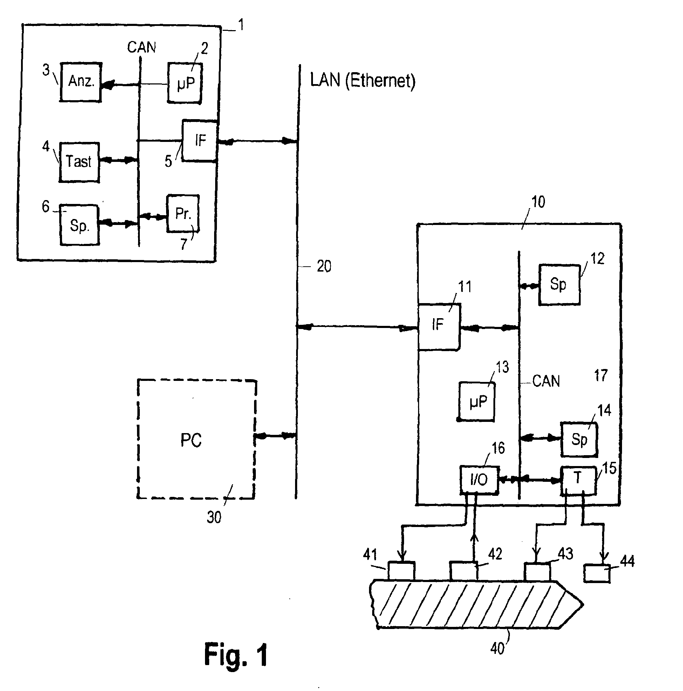

Eine derartige Spritzgießmaschine ist aus der EP 0 916 466 A1 bekannt. Der schematische Aufbau des bekannten Steuersystems für eine Spritzgießmaschine ist in Figur 1 dargestellt.

Die bekannte Steuerung umfaßt eine Bedienereinheit 1, eine Maschinensteuerung 10 sowie die Spritzgießmaschine 40, die hier schematisch als Schneckenspritzgießmaschine dargestellt ist.

Die Bedienereinheit 1 umfaßt eine Anzeigevorrichtung 3, eine Tastatur 4, einen Speicher 6, einen Mikroprozessor 2 und einen Drucker 7, die miteinander über einen seriellen Bus CAN 8 kommunizieren. Über die genannten Elemente können Daten zur Steuerung der Spritzgießmaschine eingegeben werden und durch die Anzeige 3 visualisiert werden. Des weiteren können Massenspeicher oder dergleichen vorgesehen sein, und es können auch Programme zur Steuerung der Spritzgießmaschine eingelesen werden.

Ferner weist die Bedienereinheit 1 eine Schnittstelle 5 auf, die einerseits mit dem seriellen Bus 8 in Verbindung steht, andererseits als Adapter für ein Netzwerksystem 20 zur Kommunikation mit der Spritzmaschinensteuerung 10 dient. Das Netzwerk 20 ist vorzugsweise als LAN ausgebildet, insbesondere als Ethernet.

Die Maschinensteuerung 10 weist ihrerseits ebenfalls eine Schnittstelle 11 auf, die einerseits als Adapter für das Netzwerk 20 ausgebildet ist, andererseits mit einem seriellen Bussystem CAN 17 in der Maschinensteuerung 10 kommuniziert. Neben der Schnittstelle 11 weist die Maschinensteuerung 10 ferner Speicher 12, 14, einen Mikroprozessor 13 sowie Schnittstellen 16, 15 auf, wobei die genannten Elemente miteinander über das serielle Netzwerk 17 kommunizieren.

Die Schnittstellen 15, 16 sind mit Sensoren bzw. Aktuatoren 41, 42, 43, 44 verbunden und geben Daten oder Befehle an die Aktuatoren 41, 43, 44 oder empfangen Daten von dem Sensor 42 bzw. weiteren Sensoren.

Die Sensoren umfassen typischerweise Temperatur-, Druck-, Wegsensoren und dergleichen, die Aktuatoren sind typischerweise Motoren oder Hydrauliken zum Drehen der Schnecke, zum Verfahren der Schnecke, Öffnen oder Schließen der Form etc.

Bei dem bekannten System werden Daten manuell über die Tastatur 4 der Bedienerstation 1 eingegeben und Programme können eingelesen werden. Die entsprechenden Datenprogramme werden dann über das LAN-Netzwerk 20 an die Maschinensteuerung 10 geliefert und dort gespeichert bzw. für die Steuerung weiterverarbeitet, und die entsprechenden Befehle für die Aktuatoren werden generiert und weitergeleitet. Umgekehrt werden Daten von den Sensoren für die Maschinensteuerung 10 und das LAN-Netzwerk 20 an die Bedienerstation ausgegeben und können dort visualisiert werden.

Das dargestellte System ist für die Echtzeitmaschinensteuerung geeignet, da die Maschinensteuerung 10 direkt die Maschine steuert und ein schnelles serielles Netzwerk 17 verwendet.

Demgegenüber erfolgt die Bedienung der Maschinensteuerung 10 über die Bedienstation 1 und das LAN-Netzwerk 20, das nicht in Echtzeit arbeitet. Dieses Netzwerk bietet jedoch den Vorteil der Kompatibilität mit beispielsweise dem Internetprotokoll, und an dieses Netzwerk können problemlos weitere Rechner, beispielsweise ein PC 30 angeschlossen werden, beispielsweise zur Visualisierung, Dokumentation oder dergleichen.

Bei der oben dargestellten Anordnung liegt in der Regel eine starre Verbindung, beispielsweise zwischen der Tastatur und der Anzeigevorrichtung 3 vor, die beide denselben Prozessor verwenden.

Die EP 0 990 966 zeigt eine Spritzgießmaschine gemäß dem Oberbegriff des Anspruchs 1.

Der Erfindung liegt die Aufgabe zugrunde, eine Spritzgießmaschine zu schaffen, die sich durch eine möglichst große Variationsbreite hinsichtlich der Implementation auszeichnet.

Diese Aufgabe wird durch eine Spritzgießmaschine nach Anspruch 1 gelöst; die weiteren Patentansprüche betreffen weitere Ausgestaltungen der Erfindung.

Erfindungsgemäß wird eine flexible Zuordnung zwischen den Eingabe- und Ausgabemitteln, untereinander sowie zu den Sensoren und Aktuatoren vorgeschlagen, wobei die Zuordnung online veränderbar ist. Somit liegen keine unveränderlich starren Datenwege zwischen den Ein- und Ausgabemitteln, den Sensoren und Aktoren sowie einer oder mehrerer Rechnereinheiten vor. Deshalb können in einfacher Weise weitere Eingabemittel wie Tastaturen, Funktionstasten, Bedienungsknöpfe etc. zugefügt werden bzw. mit anderen Funktionen belegt werden. Entsprechendes gilt auch für die Ausgabemittel wie Bildschirme, Anzeigeelemente, LEDs, Drucker etc.

Vorzugsweise sind die Rechnereinheit der Spritzgießmaschine und die Eingabe-/Ausgabemittel oder Bedienerstation mit einer Gigalink-Schnittstelle ausgestattet und kommunizieren über eine Gigalinkverbindung miteinander. Die Gigalinkverbindung zeichnet sich einerseits durch einen hohen Datendurchsatz aus, andererseits können die Daten über eine große Entfernung zuverlässig übertragen werden.

In einer anderen Ausführungsform sind eine oder mehrere Rechnereinheiten, eine oder mehrere Bedientastaturen und Schnittstellen für Aktuatoren/Sensoren über ein serielles Bussystem miteinander verbunden. Dies ermöglicht es, mehrere Systeme, beispielsweise Rechnereinheiten, Bedienungstastaturen etc., gleichrangig nebeneinander vorzusehen, so daß hier ein hoher Grad an Flexibilität erreicht ist und das System ohne weiteres durch zusätzliche Einheiten zur Visualisierung oder Eingabe und Ausgabe von Information erweiterbar ist.

Dabei kann eine Anzeigeneinheit beispielsweise über eine Rechnereinheit mit dem seriellen Bussystem verbunden sein, und es können mehrere derartige Anzeige/Rechnereinheiten vorgesehen sein.

In einer alternativen Ausgestaltung kann die Anzeigeeinheit selbst über eine geeignete Schnittstelle mit dem seriellen Bussystem verbunden sein.

In einer bevorzugten Ausgestaltung sind eine oder mehrere Tasten der Tastatur bzw. der Tastaturen als parametrisierbare Tasten ausgelegt, das heißt, diese Tasten können mit bestimmten Funktionen belegt werden, entweder bei der Implementierung der Anlage oder durch Programmierung durch eine Bedienungsperson.

Ausführungsformen der Erfindung werden anhand der beigefügten Zeichnungen erläutert.
Fig. 1 zeigt ein bekanntes Steuersystem für eine Spritzgießmaschine;
Fig. 2 zeigt schematisch unterschiedliche Steuersysteme für eine Spritzgießmaschine.

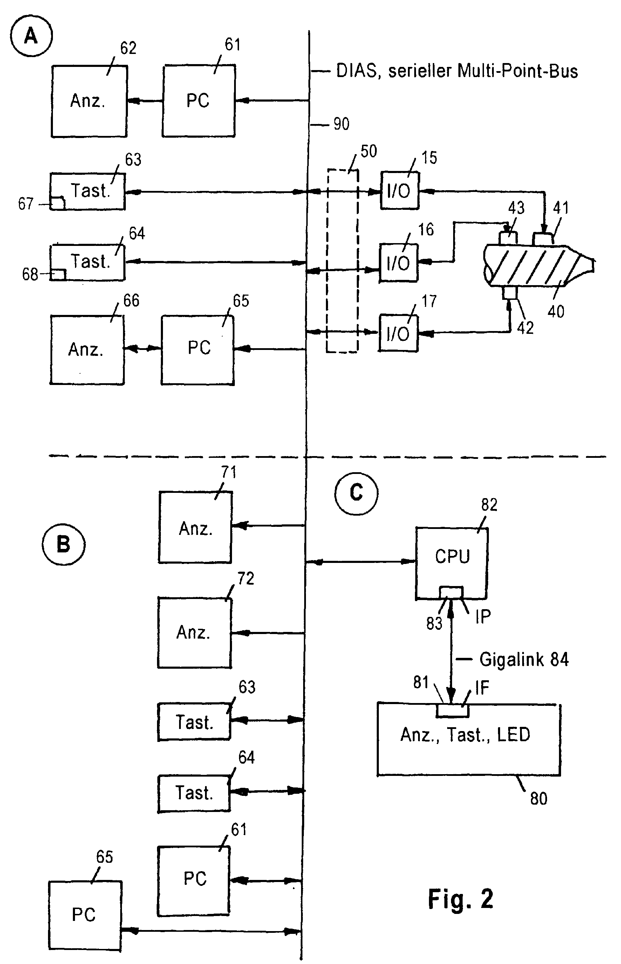

Ein erstes Steuersystem zeigt die Fig. 2(A). Dabei ist die Spritzgießmaschine 40 ebenfalls mit Aktuatoren bzw. Sensoren 41, 42, 43 ausgestattet, die mit Schnittstellen 15, 16, 17 zur Eingabe bzw. Ausgabe von Daten verbunden sind. Diese Schnittstellen 15-17 sind mit einem seriellen Bussystem 90 (DIAS, serieller Multi-Point-Bus) verbunden. An das Bussystem sind andererseits eine Rechnereinheit 61, eine Anzeigeeinheit 62, zwei Tastaturen 63, 64 sowie eine weitere Rechnereinheit 65 mit einer weiteren Anzeigeeinheit 66 angeschlossen, und die genannten Elemente kommunizieren über das serielle Bussystem miteinander. Bei der dargestellten Konfiguration arbeitet zumindest eine der Rechnereinheiten 61, 65 als Maschinensteuerung zur Steuerung des Prozeßablaufs.

Alternativ dazu kann auch eine separate Maschinensteuerung 50 zwischen dem Bussystem 90 und den Schnittstellen 15, 16, 17 vorgesehen sein. Bei dieser letzteren Implementierung dienen die Rechner im wesentlichen zur Befehls- und Dateneingabe bzw. zur Datenausgabe und zur Visualisierung.

Schematisch dargestellt sind an den Tastaturen 63, 64 separate Anzeigeelemente 67, 68, die beispielsweise als LED- Elemente ausgelegt sein können und die zur Anzeige ausgewählter Signale dienen, beispielsweise Maschinenmodus, Tastenbelegung etc.

Die durch (B) bezeichnete Ausführungsform der Fig. 2 entspricht im wesentlichen der Ausführungsform unter (A) mit der Ausnahme, daß die Anzeigeeinheiten 71, 72 selbst mit dem seriellen Bus 90 verbunden sind.

Bei der mit (C) bezeichneten Ausführungsform ist eine separate Bedienungseinheit 80 vorgesehen, die beispielsweise eine Anzeige, eine Tastatur und LED Elemente aufweist. Neben diesen Elementen ist ferner eine Gigalink-Schnittstelle 81 zur Verbindung mit einem Gigalinkbus 84 vorgesehen. Neben den zur Datenein-/Ausgabe und zur Verbindung erforderlichen Kapazitäten benötigt diese Bedienungseinheit 80 keine weitere "Intelligenz".

Die Bedienungseinheit ist über das Gigalinksystem 84 mit einer CPU 82 verbunden, die ihrerseits ebenfalls eine Gigalink-Schnittstelle 83 aufweist.

Diese CPU 82 ist mit dem seriellen Bussystem 90 verbunden und kann als Maschinensteuerung dienen, die die gesamte Prozeßsteuerung vornimmt. Andererseits kann auch hier eine separate Maschinensteuerung 50 vorgesehen sein, wobei die CPU 82 als Verbindung zwischen dem seriellen Bussystem und dem Gigalinksystem 84 dient.

Die dargestellten Ausführungsformen (A), (B) und (C) können alternativ eingesetzt werden, es ist jedoch auch möglich, diese Ausführungsformen zu kombinieren. Dabei können die Funktionen der Maschinensteuerung einzelnen Rechnern, beispielsweise 61, 82 oder 50, zugewiesen werden, diese Funktionen können aber auch auf verschiedene Rechner verteilt werden, und insbesondere für zeitkritische Parameter kann eine separate Maschinensteuerung 50, die physikalisch nahe an den Aktuatoren/Sensoren 15-17 angeordnet ist, vorgesehen sein.

Unter dem Begriff "Rechner" im Sinne des vorstehenden Textes fallen CPUs, Mikroprozessoren, kundenspezifische Rechner und auch kommerziell erhältliche Personalcomputer, Workstations und dergleichen.

Alle oben beschriebenen Systeme sind vorzugsweise so ausgelegt, daß die funktionelle Zuordnung der einzelnen Elemente veränderbar festgelegt ist. Dazu können beispielsweise in einem Speicher wie der Festplatte eines PCs, einem RAM, einem magnetischen Datenspeicher etc. die Verbindungen der einzelnen Eingabe- und Ausgabemittel untereinander bzw. zu einem oder mehreren Rechnereinheiten bzw. Sensoren und Aktuatoren gespeichert sein. Dadurch ist bestimmt, welche Tastatureingabe auf welchem Bildschirm erscheint, welche Rechnereinheit über welche Tastatur angesprochen wird etc. Auch können bestimmte Bedienungselemente mit bestimmten Prozessoren direkt verknüpft werden, um einen direkten Eingriff in den Prozessablauf zu gestatten.

Durch Zugriff auf den Zuordnungsspeicher können beliebige Verknüpfungen geändert, zugefügt oder entfernt werden, wobei dieser Zugriff grundsätzlich auch extern über ein Datennetz erfolgen kann.

## Patentansprüche

1. Spritzgießmaschine mit Ein- und Ausgabemitteln (80, 63, 64, 62, 66), Aktuatoren und Sensoren (41, 42, 43) und mindestens einer Rechnereinheit (65, 61),
**dadurch gekennzeichnet, dass**
die funktionelle Zuordnung der Ein- und Ausgabemittel untereinander sowie zu den Sensoren und Aktuatoren über die Rechnereinheit festlegbar und online veränderbar ist.

2. Spritzgießmaschine nach Anspruch 1 mit mehreren Rechnereinheiten, wobei die Datenflußwege zwischen den Rechnereinheiten und deren funktionelle Zuordnung onlinveveränderbar sind.

3. Spritzgießmaschine (C) nach Anspruch 1 oder 2, ***dadurch gekennzeichnet,* daß** die Rechnereinheit (82) und die Eingabe-/Ausgabemittel (80) jeweils eine Gigalink-Schnittstelle (81, 83) aufweisen und über eine Gigalinkverbindung miteinander kommunizieren.

4. Spritzgießmaschine (A, B) nach Anspruch 1 oder 2, ***dadurch gekennzeichnet,* daß** jede Rechnereinheit, jeder Sensor/Aktuator und die Eingabemittel eine Schnittstelle für ein serielles Bussystem (90) aufweisen und über das Bussystem miteinander kommunizieren.

5. Spritzgießmaschine (A) nach Anspruch 4, ***dadurch gekennzeichnet,* daß** mindestens eine Anzeigeneinheit (62, 66) von der oder den Rechnereinheiten (61, 65) betrieben wird.

6. Spritzgießmaschine (B) nach Anspruch 4, ***dadurch gekennzeichnet,* daß** mindestens eine Anzeigeeinheit (71, 72) eine Schnittstelle für ein serielles Bussystem (90) aufweist.

7. Spritzgießmaschine nach einem der Ansprüche 1 bis 4, ***dadurch gekennzeichnet,* daß** die Eingabemittel oder die Eingabeeinheiten (63, 64) als Tastaturvorrichtung mit Anzeigeelementen (67, 68) ausgebildet sind.

8. Vorrichtung nach einem der Ansprüche 1 bis 7, ***dadurch gekennzeichnet,* daß** die Eingabemittel parametrisierbare Bedienungselemente aufweisen.

## Claims

1. An injection moulding machine comprising input and output means (80, 63, 64, 62, 66), actuators and sensors (41, 42, 43) and at least one computer unit (65, 61), **characterised in that** the functional allocation of the input and output means amongst one another and to the sensors and actuators can be specified by means of the computer unit and can be varied online.

2. The injection moulding machine according to claim 1 comprising a plurality of computer units, wherein the data flow paths between the computer units and their functional allocation can be varied online.

3. The injection moulding machine (C) according to claim 1 or claim 2, **characterised in that** the computer unit (82) and the input/output means (80) each have a gigalink interface (81, 83) and communicate with one another by means of a gigalink connection.

4. The injection moulding machine (A, B) according to claim 1 or claim 2, **characterised in that** each computer unit, each sensor/actuator and the input means have an interface for a serial bus system (90) and communicate with one another by means of the bus system.

5. The injection moulding machine (A) according to claim 4, **characterised in that** at least one display unit (62, 66) is operated by the computer unit(s) (61, 65).

6. The injection moulding machine (B) according to claim 4, **characterised in that** at least one display unit (71, 72) has an interface for a serial bus system (90).

7. The injection moulding machine according to any one of claims 1 to 4, **characterised in that** the input means or the input units (63, 64) are embodied as a keyboard device with display elements (67, 68).

8. The injection moulding machine according to any one of claims 1 to 7, **characterised in that** the input means have parametrisable operating elements.

## Revendications

1. Presse d'injection avec des moyens d'entrée et de sortie (80, 63, 64, 62, 66), des actionneurs et des capteurs (41, 42, 43) et au moins une unité de calculateur (65, 61), **caractérisée en ce que** l'attribution fonctionnelle des moyens d'entrée et de sortie entre eux ainsi que par rapport aux capteurs et actionneurs peut être définie par l'intermédiaire de l'unité de calculateur et peut être modifiée en ligne.

2. Presse d'injection selon la revendication 1 avec plusieurs unités de calculateur, les trajets des flux de données entre les unités de calculateur et leur attribution fonctionnelle pouvant être modifiés en ligne.

3. Presse d'injection (C) selon la revendication 1 ou 2, **caractérisée en ce que** l'unité de calculateur (82) et les moyens d'entrée/sortie (80) comprennent respectivement une interface Gigalink (81, 83) et communiquent entre eux par l'intermédiaire d'une liaison Gigalink.

4. Presse d'injection (A, B) selon la revendication 1 ou 2, **caractérisée en ce que** chaque unité de calculateur, chaque capteur/actionneur et les moyens d'entrée comprennent une interface pour un système de bus sériel (90) et communiquent entre eux par l'intermédiaire du système de bus.

5. Presse d'injection (A) selon la revendication 4, **caractérisée en ce qu'**au moins une unité d'affichage (62, 66) est exploitée par l'unité de calculateur ou par les unités de calculateurs (61, 65).

6. Presse d'injection (B) selon la revendication 4, **caractérisée en ce qu'**au moins une unité d'affichage (71, 72) comprend une interface pour un système de bus sériel (90).

7. Presse d'injection selon l'une quelconque des revendications 1 à 4, **caractérisée en ce que** les moyens d'entrée ou les unités d'entrée (63, 64) sont configurés comme dispositif à clavier avec des éléments d'affichage (67, 68).

8. Dispositif selon l'une quelconque des revendications 1 à 7, **caractérisé en ce que** les moyens d'entrée comprennent des éléments de commande pouvant être paramétrisés.
